# EUROPÄISCHE PATENTSCHRIFT

(11) **EP 3 832 370 B1**
(45) Veröffentlichungstag und Bekanntmachung des Hinweises auf die Patenterteilung: **15.10.2025**
(21) Anmeldenummer: 20211269.4
(22) Anmeldetag: 02.12.2020
(51) Int. Cl.: G02B 21/00, G01N 21/64, G02B 27/00, G02B 26/06, G02B 21/36

(54) **MIKROSKOPIE-VERFAHREN UND MIKROSKOP ZUR ABBILDUNG VON PROBEN MITTELS MANIPULIERTER ANREGUNGSSTRAHLUNG**
METHOD OF MICROSCOPY AND MICROSCOPE FOR IMAGING OF SAMPLES USING MANIPULATED EXCITATION BEAMS
PROCÉDÉ DE MICROSCOPIE ET MICROSCOPE POUR IMAGER UN ECHANTILLON AU MOYEN D'UN FAISCEAU D'EXCITATION MANIPULÉ

(30) Priorität: 02.12.2019 DE 102019218664
(43) Veröffentlichungstag der Anmeldung: 09.06.2021
(73) Patentinhaber: Carl Zeiss Microscopy GmbH, 07745 Jena (DE)
(72) Erfinder: SCHWEDT, Daniel, 07745 Jena (DE); ANHUT, Tiemo, 07745 Jena (DE)
(74) Vertreter: Meyer, Jork

(56) Entgegenhaltungen:
- DE-A1- 102013 018 672
- US-A1- 2015 362 713
- COLLINI MADDALENA ET AL: "Adaptive optics microspectrometer for cross-correlation measurement of microfluidic flows", JOURNAL OF BIOMEDICAL OPTICS, SPIE, 1000 20TH ST. BELLINGHAM WA 98225-6705 USA, vol. 24, no. 2, 1 February 2019 (2019-02-01), pages 25004, XP060137970, ISSN: 1083-3668, [retrieved on 20190227], DOI: 10.1117/1.JBO.24.2.025004

## Beschreibung

Die Erfindung betrifft ein Verfahren und Vorrichtung zur Abbildung von Proben mittels manipulierter Anregungsstrahlung gemäß dem jeweiligen Oberbegriff der unabhängigen Ansprüche.

Die Laserscanmikroskopie hat sich zu einem der am häufigsten eingesetzten Werkzeuge in der biomedizinischen Forschung entwickelt. Sie ermöglicht es dreidimensionale Aufnahmen von Proben zu erhalten, ohne diese zerschneiden zu müssen. Außerdem stellt sie dem Nutzer eine große Bandbreite von Methoden und Anwendungen zur Verfügung, die über eine reine Bildgebung hinausgehen. Ein nachhaltiger Trend der vergangenen Jahre besteht darin, lebende Gewebe oder ganze Organismen funktional zu untersuchen.

An Laserscanmikroskope (LSM) besteht die Anforderung, die bereits verfügbare hervorragende Bildqualität zukünftig auch in größeren Probentiefen zu erreichen und dabei auch stark streuende Gewebeschichten zu überwinden.

Um die Eindringtiefe der Strahlung in das Gewebe zu erhöhen, wird in der Regel auf nichtlineare Anregung im nahen infraroten Spektralbereich zurückgegriffen [W. Denk et al., "Two-photon laser scanning fluorescence microscopy", Science 248, 73 (1990)].

Aufgrund der größeren Wellenlänge der Anregungsstrahlung wird diese weniger stark gestreut als kurzwellige Strahlung. Es kann daher mit Anregungsstrahlung höherer Wellenlänge auch noch in größeren Tiefen der Probe ein kompakter Fokus erzeugt werden kann. Dabei gewährleistet die Nichtlinearität der Anregung, dass bei einer Anregung von Fluoreszenzereignissen eine Fluoreszenzemission nur aus dem Fokus beziehungsweise aus einem kleinen Fokusvolumen emittiert wird. Diese Beschränkung hat zudem den Vorteil, dass bei der Abbildung der Fluoreszenz als Detektionsstrahlung keine Blende (Pinhole) zur Unterdrückung außerfokaler Anteile der Detektionsstrahlung verwendet werden muss, um das optische Schneiden zu erreichen. Eine Streuung der Fluoreszenzphotonen ist nur noch dann störend, wenn diese nicht mehr innerhalb der Apertur des Mikroskopsystems verbleiben und daher nicht der Detektion zugeführt werden können. Die Qualität der Detektions-PSF spielt nur noch eine untergeordnete Rolle. Ein weiterer Vorteil nichtlinearer optischer Anregung besteht darin, dass außerfokal kaum Fluoreszenz angeregt wird. Somit wird dort auch der Farbstoff nicht geblichen und es kommt kaum zu phototoxischen Effekten. Langwellige optische Strahlung führt überdies auch kaum zu DNS-Schädigungen.

Es ist seit längerem bekannt, dass die Bildqualität eines nichtlinearen LSM deutlich erhöht werden kann, wenn die durch die Streuung in der Probe verursachten Aberrationen der Wellenfront der Anregungsstrahlung durch adaptiv-optische Methoden vorgehalten und damit letztlich kompensiert werden können [M.A.A Neil et al., "Adaptive aberration correction in a two-photon microscope", J. Microsc. 200, 105 (2000)]. Dabei wird das Anregungsvolumen verkleinert und damit ein größerer Modulationskontrast erreicht. Um die erforderlichen Informationen zur Einstellung der Wellenfrontmanipulation zu ermitteln, werden häufig bildbasierte Ansätze verwendet, die sich iterativ der Bildverbesserung nähern [D. Débarre et al., "Image-based adaptive optics for two-photon microscopy", Opt. Lett. 34, 2495 (2009)]. Problematisch dabei ist, dass bis zum Erreichen der gewünschten Bildqualität eine Vielzahl von Bildern aufgenommen werden muss. Solche Verfahren sind damit in der Regel langsam und können die Probe durch die wiederholte Beleuchtung mit Anregungsstrahlung schädigen.

Ein anderer Ansatz zielt auf die Messung der Wellenfront. Das kann interferometrisch [M. Rueckel et al., "Adaptive wavefront correction in two-photon microscopy using coherence-gated wavefront sensing", PNAS 103, 17137 (2006)] oder mit einem Shack-Hartmann-Sensor (SHS) [J.W. Cha et al., "Shack-Hartmann wavefront-sensor-based adaptive optics system for multiphoton microscopy", J. Biomed. Opt. 15, 046022 (2010); US 2015/0362713 A1] geschehen. Shack-Hartmann-Sensoren sind Kamerasysteme mit vorgeschaltetem Mikrolinsenarray (MLA). Wird Licht mit einer ebenen Wellenfront senkrecht auf den Shack-Hartmann-Sensor eingestrahlt, entsteht ein Muster das durch jeweils zu den Subaperturen des MLA zentrierte Lichtflecken gebildet wird. Abweichungen der Lichtflecken zu den Zentren der Subaperturen sind ein Maß für den lokalen Gradienten der Wellenfront. Diese Technologie liefert somit zu jedem Kamerabild die eingestrahlte Wellenfront. Es kann somit bestenfalls eine Updaterate der Wellenfrontinformation von der Größenordnung der Bildwiederholrate der SHS-Kamera erfolgen.

Eine Nutzung unterschiedlicher projizierter Punktmuster zur Korrektur auftretender Wellenfrontfehler ist in der Publikation von Collini, et al. beschrieben [M. Collini, (2019), "Adaptive optics microspectrometer for cross-correlation measurement of microfluidic flows", J. Biomed. Opt. 24: 025004 (2019)].

In Wang et al. [K. Wang et al., "Rapid adaptive optical recovery of optimal resolution over large volumes", Nat. Meth. 11, 625 (2014)] sowie der US 9,500,846 B2 wurde gezeigt, dass die Anwendung eines auf einer EM-CCD basierenden SHS auf die Fluoreszenzemission nach Mehrphotonenanregung sinnvoll einsetzbar ist, um die Wellenfrontstörung durch die Probe zu bestimmen und die Anregungswellenfront derart zu manipulieren, dass bei nachfolgend erfassten Bildern ein erheblicher Gewinn an Bildqualität auch für vergleichsweise große Eindringtiefen in der Probe erreicht werden kann.

Die bekannte Methodik der Korrektur der Wellenfront der Anregungsstrahlung ist jedoch relativ langsam und arbeitet mit hohen Intensitäten der Anregungsstrahlung. Sie ist daher nicht für eine Abbildung und Beobachtung von strahlungssensitiven und/oder sich schnell verändernden Proben geeignet.

Der Erfindung liegt die Aufgabe zu Grunde, eine Möglichkeit zur Abbildung von Proben vorzuschlagen, bei der die Sensitivität der Bilderfassung gegenüber dem Stand der Technik erhöht wird und die zugleich eine Bildrate ermöglicht, die eine Beobachtung dynamischer Prozesse der Probe zulässt.

Die Aufgabe wird durch ein Verfahren und eine Vorrichtung gemäß den unabhängigen Ansprüchen gelöst. Vorteilhafte Weiterbildungen der Erfindung sind Gegenstand der abhängigen Ansprüche.

Das Verfahren zur Abbildung einer Probe weist den Schritt der Fokussierung einer ersten Anregungsstrahlung in ein Volumen der Probe auf. Eine durch Wirkung der ersten Anregungsstrahlung bewirkte erste Detektionsstrahlung wird erfasst und unter Verwendung eines Wellenfrontdetektors hinsichtlich einer Ausbildung ihrer Wellenfront ausgewertet. Anhand dieser so erhaltenen Auswertungsergebnisse wird eine zweite Anregungsstrahlung mittels eines Wellenfrontmanipulators manipuliert, um ermittelte Abweichungen der Wellenfront zu korrigieren. Dabei werden die erste Anregungsstrahlung und die zweite Anregungsstrahlung auf den im Beleuchtungsstrahlengang angeordneten Wellenfrontmanipulator gelenkt. Die derart manipulierte zweite Anregungsstrahlung wird in das Volumen der Probe fokussiert, um Bilddaten zu erfassen. Optional kann zusätzlich eine durch die zweite Anregungsstrahlung bewirkte zweite Detektionsstrahlung manipuliert werden. Mittels der manipulierten zweiten Anregungsstrahlung wird ein abzubildender Bereich (nachfolgend synonym auch als "Patch" bezeichnet) der Probe abgetastet und die zweite Detektionsstrahlung erfasst und Bilddaten des Bereichs erhalten. Eine Manipulation der zweiten Anregungsstrahlung erfolgt, indem in einer Pupillenebene eine räumliche Phasenverteilung der zweiten Anregungsstrahlung eingestellt wird. Unter Bilddaten werden hier Messwerte verstanden, die als Ausgangsdaten zur Erzeugung von Abbildungen der abzubildenden Bereiche dienen.

Die zweite Anregungsstrahlung, genauer gesagt: dessen Strahlenbündel, wird in mindestens zwei Teilstrahlen in jeweils einen durch den jeweiligen Teilstrahl beleuchteten Lichtfleck (nachfolgend auch als "Spot" bezeichnet) in einer Fokuslage in das Probenvolumen gerichtet, wobei die Spots in einer durch die Fokuslage bestimmten und zu erfassenden Objektebene liegen und voneinander getrennt sind. Die durch die Teilstrahlen jeweils bewirkten zweiten Detektionsstrahlungen werden separat voneinander erfasst.

Die jeweils in einer Objektebene durch die fokussierten Teilstrahlen der zweiten Anregungsstrahlung erzeugten Spots werden vorteilhaft so groß und mit solchen Abständen zueinander erzeugt, dass diese deutlich voneinander separiert sind und sich weder überlappen noch berühren. Allerdings befinden sich sämtliche Spots innerhalb eines aktuell abzutastenden Bereichs oder Patchs der Objektebene.

Die Patches werden bestimmt, indem die zu erfassende Objektebene der Probe virtuell in eine Anzahl von, vorzugsweise aneinander angrenzenden, Bereichen (Patches) aufgeteilt wird. Für jeden der Patches wird die Auswertung der Wellenfront vorgenommen und die zweite Anregungsstrahlung wird anhand des Ergebnisses der Auswertung manipuliert, wenn der betreffende Patch überstrichen wird. Mit der spezifisch für den betreffenden Patch manipulierten zweiten Anregungsstrahlung wird der Patch mittels ihrer Teilstrahlen abgetastet. Ein Bild der zu erfassenden Objektebene wird durch die Gesamtheit der Patches erhalten. Eine zwei- oder dreidimensionale Abbildung der Probe oder von Teilen davon erfolgt, indem Bilddaten mehrerer zueinander entlang der optischen Achse eines verwendeten Objektivs (Z-Richtung) verschobener Objektebenen miteinander zu einer räumlichen Darstellung der Probe kombiniert werden (auch als Z-Stapel oder z-stack bezeichnet).

Diese Vorgehensweise erlaubt eine lokale Korrektur von resultierenden Wellenfrontfehlern. Da Fehler der Wellenfront in den verschiedenen Patches der Objektebene unterschiedlich sein können, wäre eine globale Korrektur über sämtliche Patches hinweg wesentlich ungenauer als die beschriebene bereichs- oder patchweise Korrektur mittels Wellenfrontmanipulation. Zudem wird durch eine qualitativ hochwertige Korrektur des (Anregungs-)Spots eine hohe Eindringtiefe der Anregungsstrahlung und die Ausbildung eines in hinreichendem Maße beugungsbegrenztem Fokus ermöglicht.

Die Wahl eines Abstands der Spots kann in Abhängigkeit von der Größe des Patches sowie der Probe, der eingesetzten Wellenlängen der Anregungsstrahlung(-en) und der spezifischen Konfiguration der für die Durchführung des Verfahrens verwendeten optischen Anordnung erfolgen. So kann beispielsweise ein Spotabstand von 240 µm in einem Scannerzwischenbild eines zur Durchführung des erfindungsgemäßen Verfahrens verwendeten Mikroskopstrahlengangs gewählt werden. Bei einer Wellenlänge der zweiten Anregungsstrahlung von 800 nm entspricht dies zehn Airy-Durchmessern. Die Spots sind damit deutlich voneinander getrennt. Um beispielsweise 64 Zeilen pro Patch bei 8x8 Patches pro Bild zu scannen, könnte ein einzelnes Patch eine Größe von 1,9 x 1,9 mm im Zwischenbild einnehmen und wäre damit pro Dimension doppelt so groß wie beispielsweise ein 4x4 Spotpattern. Mit einem 8x8 Raster dieser Patches ließe sich fast das komplette Scanfeld abdecken. Es würde ein Probenvolumen beziehungsweise eine Objektebene mit einer Sehfeldzahl von 22 gescannt.

Die Sehfeldzahl gibt den Durchmesser des Feldes im Zwischenbild des Strahlengangs in Millimetern an. Dieses Zwischenbild muss nicht notwendigerweise real vorliegen und bezieht sich auf den sogenannten Referenztubus. Für diesen gelten die Vergrößerungsangaben auf den jeweils verwendeten Objektiven. Beispielsweise wird ein Sehfeld durch ein LSM mit der Sehfeldzahl 22 abgescannt, wenn zum Beispiel ein Objektiv mit 20-facher Vergrößerung verwendet wird und in der Probenebene (Objektebene) ein Feld mit einer Diagonale von 22 mm / 20 = 1,1 mm abgetastet wird.

Die erste Anregungsstrahlung kann von der zweiten Anregungsstrahlung verschieden sein und beispielsweise eine andere Wellenlänge und/oder andere Intensität aufweisen. Die jeweiligen Anregungsstrahlungen können durch unterschiedliche Lichtquellen bereitgestellt werden. Es ist auch möglich, dass erste und zweite Anregungsstrahlung gleich sind. In einem solchen Fall ist vorteilhaft nur eine Lichtquelle erforderlich. Es liegt im Sinne der Erfindung, dass Strahlung der Lichtquelle zur Anregung der ersten Detektionsstrahlung und zur Auswertung der Wellenfront verwendet wird und somit die erste Anregungsstrahlung darstellt. Mit Strahlung derselben Lichtquelle kann außerdem, beruhend auf den zuvor erzeugten Teilstrahlen als zweite Anregungsstrahlung, die zweite Detektionsstrahlung bewirkt werden.

Um die Teilstrahlen in effizienter Weise gemeinsam manipulieren zu können, werden diese in einer Ausgestaltung des erfindungsgemäßen Verfahrens in einer zur Objektivpupille optisch konjugierten Ebene einander überlagert und auf einen Wellenfrontmanipulator abgebildet. Mittels diesem können die Teilstrahlen gemeinsam manipuliert werden. Auf alle Spots wirkt, abgesehen von einem spotabhängigen Tilt, die exakt gleiche Wellenfrontkorrektur, da alle Spots aus einer gemeinsamen Pupille resultieren. Dies ist gerechtfertigt, da alle Spots innerhalb des sogenannten isoplanatischen Patches oder Bereiches mit der zuvor bestimmten Korrektur scannen.

Die Teilstrahlen können in einer vorteilhaften Ausgestaltung des Verfahrens in der Objektebene Spots bewirken, die in Form eines Arrays mit Zeilen und Spalten vorliegen. Die Abtastung eines jeweiligen Patches mittels des Arrays kann entlang der Richtung der Zeilen und/oder der Spalten oder entlang beliebiger Richtungen vorgenommen werden.

Ein solches Array kann beispielsweise als ein 4x4-Array bewirkt sein. In jeder Zeile und in jeder Spalte sind also vier Spots in der betreffenden Objektebene bewirkt. Werden diese Arrays entlang beispielsweise einer Zeile verschoben, kann mit jedem der Spots einer Zeile beispielsweise eine Fluoreszenzstrahlung als zweite Detektionsstrahlung angeregt und mittels geeigneter Detektoren erfasst werden. Die Anregung kann daher mit einer gegenüber der Abtastung mit nur einem Spot geringeren, insbesondere nur ein Viertel betragenden, Anregungsintensität je Zeitpunkt erfolgen. Eine 4x4 Parallelisierung kann dazu eingesetzt werden, um eine gegenüber den aus dem Stand der Technik bekannten Verfahren eine 4-fache Verkürzung der Bildaufnahmezeit von beispielsweise nur noch 0,25 Sekunden statt bisher einer Sekunde (Wang et al., 2014) zu erreichen. Gleichzeitig kann vorteilhaft die Anregungsintensität pro Spot um einen Faktor 4 verringert werden. Die Erfindung erlaubt daher eine schnellere und sensitivere Erfassung von Bilddaten.

Im Vergleich zu bekannten Verfahren, insbesondere zu Wang et al., 2014, werden mit dem erfindungsgemäßen Verfahren signifikante Verbesserungen erreicht. So ergibt eine innerhalb plausibel gewählter Patches gemittelte Wellenfront auf den Scan des gesamten Patches angewandt eine deutliche Signal- und Bildverbesserung. Zudem lässt sich das System ohne große Latenzzeiten designen. Es ist möglich, innerhalb eines Zeitraums von 14 ms eine Analyse der Wellenfront mit einem Wellenfrontdetektor, beispielweise einem Shack-Hartmann-Sensor (SHS), durchzuführen. Zugleich kann eine aktuell eingestellte Wellenfrontmanipulation angepasst werden. Beispielsweise wird ein Phasenpattern eines räumlichen Lichtmodulators (spatial light modulator; SLM) als Wellenfrontmanipulator innerhalb des genannten Zeitraums angepasst.

Die Wellenfrontkorrektur ist im Wesentlichen bestimmt durch die Bildrate der Kamera des Wellenfrontdetektors (z. B. der SHS-Kamera) und die Updaterate des Wellenfrontmanipulators, z. B. eines SLM. Aktuell sind bereits EM-CCD-basierte SHS (z. B. SH-EMCCD-fast-468 von Alpao) mit 2 kHz Bildrate bei 23x23 Stützstellen zur Wellenfrontbestimmung verfügbar. Die Rohdaten werden damit innerhalb von weniger als 1 ms eingelesen. Zukünftige Technologien wie SPAD-Kameras (single photon avalanche diode) und Quanta Image Sensoren (QIS; z. B. CMOS-Sensoren) könnten bei größerer Pixelzahl potentiell sogar noch schneller werden. Schnelle SLMs schaffen derzeit updates in weniger als zwei Millisekunden (z. B. Meadowlark HSP5120L). Eine Limitierung der Erfassung von (Bild-)Daten wird damit nicht mehr akquisebedingt sein.

Legt man zum Beispiel eine Scanfrequenz von 2 kHz (entspricht der Einstellung "Speed 15" im LSM 780; Carl Zeiss Microscopy GmbH) zugrunde, lassen sich 64 Bildzeilen innerhalb von 16 ms scannen. Somit ist eine Synchronisierung von Wellenfrontmanipulation und Abtasten eines Patches leicht mittels des Frametriggers des LSM möglich. Eine Unterteilung des Objektfelds (Field of View; FoV) in 8x8 Patches würde damit ein Bild mit einer Auflösung von 512x512 Pixeln ergeben. Die Scanzeit eines gesamten Frames betrüge eine Viertelsekunde (im Vergleich: eine Sekunde ohne 4x4 Parallelisierung).

Sowohl in Verfahren nach dem Stand der Technik als auch in einem erfindungsgemäßen Verfahren bedarf es zweier Scans oder Abtastungen eines jeweiligen Bereichs oder Patches. Zuerst wird anhand der ersten Detektionsstrahlung die mittlere Wellenfront innerhalb des Patches ermittelt, um daraus einen Korrekturterm für die Wellenfrontmanipulation der zweiten Anregungsstrahlung - und optional der zweiten Detektionsstrahlung - zu ermitteln. Dann wird mit der so manipulierten und korrigierten Wellenfront der zweiten Anregungsstrahlung der eigentliche Bildscan eingezogen. Die totale Scanzeit beträgt bei Ausführung des erfindungsgemäßen Verfahrens pro Bild beispielsweise eine halbe Sekunde. Demgegenüber beträgt die totale Scanzeit gemäß Verfahren nach dem Stand der Technik zwei Sekunden und somit 4-mal so lang.

Das erfindungsgemäße Verfahren kann auch derart ausgestaltet sein, dass mindestens ein Teilstrahl eine von den Intensitäten der anderen Teilstrahlen abweichende Intensität besitzt. Entsprechend ist auch der betreffende Spot durch Strahlung mit einer Intensität gebildet, die von der Intensität wenigstens einiger der anderen Spots abweicht. Eine solche Ausgestaltung ist beispielsweise für sogenannte HDR-Abbildungen (high dynamic range) von Vorteil.

Die erste Anregungsstrahlung kann über den jeweiligen Patch geführt und die gewünschten Daten zur Wellenfront erhoben werden. Anschließend wird mittels der Teilstrahlen der entsprechend manipulierten zweiten Anregungsstrahlung der Patch abgetastet und Bilddaten erfasst. In einer weiteren Ausgestaltung des Verfahrens können erste und zweite Anregungsstrahlung zeitgleich bereitgestellt und auf die Probe gerichtet werden. Beispielsweise kann neben einem Array von Teilstrahlen der zweiten Anregungsstrahlung ein Strahl der ersten Anregungsstrahlung in einen zukünftig zu erfassenden Patch mit einer zukünftig zu erfassenden Fokuslage (entlang der optischen Achse [z-Richtung] versetzte Objektebene) oder auf einen zukünftig zu erfassenden Patch der selben Objektebene gerichtet werden. Der zukünftig zu erfassende Patch wird von der zweiten Anregungsstrahlung erst in einem zukünftigen Erfassungsschritt erfasst, der nach einem aktuellen Erfassungsschritt ausgeführt wird. Diese Ausgestaltung erlaubt vorteilhaft eine schnellere Bilderfassung, da die Auswertungsergebnisse der Wellenfront der zukünftigen Fokuslage (Objektebene) beziehungsweise des zukünftig zu erfassenden Bereichs bereits mit dem Ende des aktuellen Erfassungsschritts vorliegen. Der zukünftige Erfassungsschritt kann unmittelbar anschließend an den aktuellen Erfassungsschritt ausgeführt werden, was eine weitere Verdopplung der Geschwindigkeit des erfindungsgemäßen Verfahrens ermöglicht.

Zur Durchführung des erfindungsgemäßen Verfahrens wird vorteilhaft eine Vorrichtung zur Abbildung einer Probe verwendet, die einen Beleuchtungsstrahlengang und einen Detektionsstrahlengang aufweist.

Der Beleuchtungsstrahlengang umfasst wenigstens eine Lichtquelle zur Bereitstellung einer ersten Anregungsstrahlung und einer zweiten Anregungsstrahlung. Diese mindestens eine Lichtquelle ist beispielsweise eine gepulste Laserlichtquelle, die insbesondere zur Verwendung in einer Mehrphotonenanregung geeignet ist. Weiterhin ist ein Objektiv zur Fokussierung der ersten und der zweiten Anregungsstrahlung in eine zu erfassende Objektebene der Probe vorhanden. Das Objektiv dient vorzugsweise auch zur Erfassung von erster und zweiter Detektionsstrahlung. Um die erste und zweite Anregungsstrahlung auf die betreffenden Bereiche oder Patches zu richten und um die Patches abzutasten, ist mindestens eine Einheit zur Strahlablenkung mit mindestens einem Scanner vorhanden. Die erste Anregungsstrahlung und die zweite Anregungsstrahlung sind im Beleuchtungsstrahlengang auf den Wellenfrontmanipulator gelenkt. Eine Manipulation der zweiten Anregungsstrahlung erfolgt mittels eines Wellenfrontmanipulators. Die erste beziehungsweise die zweite Detektionsstrahlung werden durch Wirkung der Einheit zur Strahlablenkung wieder descannt, also deren Auslenkung in der Objektebene wird im Detektionsstrahlengang wieder aufgehoben.

In dem Detektionsstrahlengang ist ein Strahlteiler angeordnet, der zur Trennung von erster beziehungsweise zweiter Anregungsstrahlung einerseits und Detektionsstrahlungen andererseits dient. Dabei werden durch die erste Anregungsstrahlung eine erste Detektionsstrahlung und durch die zweite Anregungsstrahlung eine zweite Detektionsstrahlung bewirkt.

Die zweite Detektionsstrahlung wird mittels eines im Detektionsstrahlengang angeordneten Detektors erfasst. Der Detektor ist beispielsweise ein Bilddetektor, mittels dem die zweite Detektionsstrahlung als Daten, insbesondere als Bilddaten erfasst wird. Außerdem sind ein Wellenfrontdetektor zur Erfassung von Wellenfronten der ersten Detektionsstrahlung, sowie eine Auswerte- und Steuereinheit zur Auswertung erfasster Daten der Wellenfronten der ersten Detektionsstrahlung und zur Ansteuerung des Wellenfrontmanipulators anhand der Auswertungsergebnisse vorhanden.

Gekennzeichnet ist eine erfindungsgemäße Vorrichtung dadurch, dass im Beleuchtungsstrahlengang optische Mittel zur Erzeugung mindestens zweier Teilstrahlen der zweiten Anregungsstrahlung vorhanden sind, und der Bilddetektor zur simultanen, getrennten Erfassung der Bilddaten der Detektionsstrahlung der Teilstrahlen der zweiten Anregungsstrahlung ausgebildet ist.

Die Erzeugung der Teilstrahlen im Beleuchtungsstrahlengang kann mit dem Wellenfrontmanipulator oder mittels eines zwischen Laserlichtquelle und Wellenfrontmanipulator angeordneten Spotgenerators erfolgen. Der Spotgenerator kann ein Punktpattern, beispielsweise ein 4x4-Array, erzeugen. Dazu kann ein weiterer SLM verwendet werden.

Der Spotgenerator kann ein- und abschaltbar ausgeführt sein. Im abgeschalteten Zustand gelangt lediglich ein Strahl in den Beleuchtungsstrahlengang, der in diesem Betriebszustand als Strahl der ersten Anregungsstrahlung bereitgestellt ist. Während der Abtastung eines jeweiligen Patches der Probe mit der zweiten Anregungsstrahlung ist der Spotgenerator eingeschaltet. Der bisherige Strahl der ersten Anregungsstrahlung wird entweder abgeschaltet oder geht, gegebenenfalls in modifizierter Form, als einer der Teilstrahlen der zweiten Anregungsstrahlung in das zu erzeugende Muster von Spots mit ein.

Alternativ kann auch einer der Teilstrahlen hinsichtlich einer aktuell zu erfassenden Objektebene defokussiert werden und stattdessen als erste Anregungsstrahlung auf eine zukünftig zu erfassende Objektebene fokussiert sein. Ein entsprechender Defokus dieses als erste Anregungsstrahlung genutzten Teilstrahls kann mittels des Wellenfrontmanipulators erzeugt werden.

Kennzeichnend ist außerdem, dass die Auswerte- und Steuereinheit zur Ansteuerung des Wellenfrontmanipulators, der Einheit zur Strahlablenkung und optional zur Ansteuerung des Spotgenerators ausgebildet ist, um anhand der Auswertungsergebnisse die zweite Anregungsstrahlung zu manipulieren, indem eine räumliche Phasenverteilung der zweiten Anregungsstrahlung mittels des Wellenfrontmanipulators in einer Pupillenebene eingestellt wird, um ermittelte Abweichungen der Wellenfront zu korrigieren. Ein abzubildender Bereich der Probe wird mittels der zweiten Anregungsstrahlung abgetastet, und es wird eine durch die zweite Anregungsstrahlung bewirkte zweite Detektionsstrahlung als Bilddaten erfasst. Dabei wird die zweite Anregungsstrahlung in mindestens zwei Teilstrahlen in jeweils einen durch den jeweiligen Teilstrahl beleuchteten Spot in einer Fokuslage in das Probenvolumen gerichtet, wobei die Spots in einer durch die Fokuslage bestimmten und zu erfassenden Objektebene voneinander getrennt sind und die durch die Teilstrahlen jeweils bewirkten zweiten Detektionsstrahlungen separat erfasst werden.

Teilstrahlen können in einer nicht erfindungsgemäßen Vorrichtung auch aus einem Strahlenbündel der zweiten Anregungsstrahlung unter Nutzung klassischer Strahlteilungen mit dielektrischen Schichten oder Strahlteilungen in Wellenleitern erzeugt werden.

Zu simultanen Erfassung der von den Teilstrahlen bewirkten zweiten Detektionsstrahlungen kann beispielsweise ein Multianodenphotonenmultiplier (MA-PMT) oder eine SPAD-Kamera (single photon avalanche diode) als Bilddetektor vorhanden sein.

Um die Manipulation der zweiten Anregungsstrahlung mit nur einem Wellenfrontmanipulator vornehmen zu können, ist vorteilhaft eine optische Einheit (Relayoptik) im Beleuchtungsstrahlengang vorhanden, durch deren Wirkung die Teilstrahlen in einer zur Pupille des Objektivs optisch konjugierten Ebene einander überlagert und gemeinsam auf den Wellenfrontmanipulator abgebildet werden. Mittels einer sogenannten Relayoptik können zwei zueinander konjugierte Ebenen erzeugt werden. Dabei wird die Objektivpupillenebene auf die Ebene des Manipulators, beispielsweise die SLM-Ebene, abgebildet. Dadurch kann dort die Phasenverteilung der zweiten Anregungsstrahlung so manipuliert werden, als würde dies in der Pupille geschehen. Eine durch Wirkung der Relayoptik auftretende Bildumkehr ist nicht hinderlich, muss aber hinsichtlich der räumlichen Verteilung des Phasenmusters (Phasenpattern; phase pattern) berücksichtigt werden.

Als Einheit zur Strahlablenkung sind in einer Ausführung der erfindungsgemäßen Vorrichtung ein quasistatischer Scanner zur Ablenkung der ersten und zweiten Anregungsstrahlung in einer ersten Richtung und ein zweiter quasistatischer Scanner zur Ablenkung der ersten und zweiten Anregungsstrahlung in einer zur ersten Richtung orthogonalen zweiten Richtung vorhanden. Zusätzlich kann ein resonanter Scanner zur Ablenkung der ersten und zweiten Anregungsstrahlung in der ersten oder in der zweiten Richtung vorhanden sein. Eine solche Ausführung ist vorteilhaft, da aufgrund der Beschleunigung der Wellenfrontanalyse mit dem Wellenfrontdetektor die räumliche Mittelung der Wellenfront über den Patch mit einem quasistatischen Galvanometerscanner nicht mehr zu gewährleisten ist. Die Scanner sind vorzugsweise aufeinander abgebildet und in einer zur Objektivpupille konjugierten Ebene angeordnet.

Mit einer erfindungsgemäßen Ausführung der Einheit zur Strahlablenkung aufweisend einen zusätzlichen resonanten Scanner kann während der Integrationszeit beispielsweise einer SHS-Kamera ein größerer Abschnitt der Objektebene überstrichen werden. Der resonante Scanner sorgt für den Zeilenscan. Der ebenfalls in Zeilenrichtung ablenkende der beiden quasistatischen Scanner wird zur Auswahl des jeweiligen Patches genutzt und definiert nur einen Offsetwinkel. Das Scannen mit einem resonanten Scanner bewirkt aufgrund dessen höherer Abtastfrequenz eine inhärente Beschleunigung des Bildeinzugs um beispielsweise einen Faktor 4. Um das Signal-Rausch-Verhältnis (signal-to-noiseratio; SNR) aufgrund der verkürzten Pixelverweilzeit nicht zu verschlechtern, kann das 4x4 Spotpattern gänzlich zur Datenmittelung herangezogen werden.

So können in weiteren Ausführungen der Erfindung die Patches auch in Spaltenrichtung mehrfach von den Spots überstrichen werden, um das SNR zu verbessern. Wie bereits beschrieben ist außerdem die Verwendung von Resonanzscannern möglich, um die Spots über die Patches zu bewegen und dadurch eine 4x-erhöhte Geschwindigkeit der Datenerfassung zu erreichen. Diese Ausführungsmöglichkeit kann zudem mit der bereits beschriebenen Erfassung per Multispot kombiniert werden, was zu einer superschnellen (16x) Datenerfassung und Bildaufnahme führt.

Um die Probe zu schonen und vor unnötiger Beleuchtung mit Anregungsstrahlung zu schützen, kann in der Zeit zwischen Datenakquise mit dem Wellenfrontdetektor und dem Bildeinzug die Intensität der Anregungsstrahlung beispielsweise mittels eines Akustooptischen Modulators (AOM) gedämpft werden.

Im Detektionsstrahlengang sollen zwei Funktionen erfüllt werden. Zum einen soll erste Detektionsstrahlung auf einen Wellenfrontdetektor gelenkt werden. Zum anderen soll zweite Detektionsstrahlung auf einen Bilddetektor gelangen. Um diese beiden Funktionen umzusetzen, sind unterschiedliche technische Maßnahmen möglich, die entweder beide Detektoren mit Anteilen beider Detektionsstrahlungen beaufschlagen oder durch deren Wirkung eine Trennung und gerichtete Weiterführung von erster und zweiter Detektionsstrahlung erfolgt.

Beispielsweise kann ein variabler Strahlteiler im Detektionsstrahlengang angeordnet sein. Dieser kann beispielsweise als ein Filterrad ausgebildet sein, das eine neutralteilende Verlaufsspur auf einem konstanten Radius aufweist. Damit kann das Teilungsverhältnis zwischen Bilderfassung und Wellenfrontdetektion optimiert werden. Das Filterrad kann auch als Farbteiler ausgebildet sein und einen Farbverlauf aufweisen, beispielsweise eine räumliche Variation der Filterkante eines Langpassfilters. Die Filterkante wird vorzugsweise so eingestellt, dass vom langwelligen Ende des Farbstoffspektrums gerade so viel auf den Wellenfrontdetektor gebracht wird, wie notwendig ist, um die Auswertung der Wellenfront korrekt auszuführen. Der verbleibende Rest des Signals, insbesondere der aus dem Intensitätsmaximum, wird zur Bilderfassung dem Bilddetektor zugeführt. Des Weiteren ist es bei mehrfach dotierten Proben auch möglich, den Farbteiler so einzustellen, dass parasitär angeregte Farbstoffe zum Wellenfrontdetektor propagieren, während das gewünschte Signal detektiert wird. Zudem können die Verläufe auch auf linear verschiebbaren Substraten aufgebracht sein oder es können Teilermatrizen eingesetzt werden. Die vorstehend genannten Ausführungen des Detektionsstrahlengangs können vorteilhaft variabel einstellbar ausgebildet sein, damit eine manuelle und/oder automatische Anpassung an jeweils aktuelle Betriebsbedingungen der Vorrichtung möglich ist.

Eine Zuführung nur von erster Detektionsstrahlung zum Wellenfrontdetektor und von zweiter Detektionsstrahlung nur zum Bilddetektor kann beispielsweise mittels einer Blende, eines optischen Keils oder eines Spiegels im Detektionsstrahlengang erreicht werden. Wird eine Blende eingesetzt, kann diese im Detektionsstrahlengang vor dem Bilddetektor am Ort eines Zwischenbildes insbesondere einer Relayoptik zur Unterdrückung außerfokaler Anteile der ersten und zweiten Detektionsstrahlung angeordnet sein. Der Blendendurchmesser ist dabei etwa so groß wie der gewählte Abstand der Spots zueinander.

In einer weiteren Ausführung der Vorrichtung ist im Detektionsstrahlengang ein weiterer Wellenfrontmanipulator vorhanden, der dem Bilddetektor vorgeordnet ist. Dieser dient zur Manipulation der zweiten Detektionsstrahlung anhand der Auswertungsergebnisse der ersten Detektionsstrahlung. Damit wird die Fokussierbarkeit der Fluoreszenzstrahlung der zweiten Detektionsstrahlung erhöht und ein Übersprechen (crosstalk) zwischen den zweiten Detektionsstrahlungen der jeweiligen Spots wird erheblich reduziert. Mit dieser Ausführung vergrößert sich vorteilhaft die parallelisierbare Eindringtiefe des erfindungsgemäßen bildgebenden Verfahrens und des Mikroskops beziehungsweise der erfindungsgemäßen Vorrichtung.

Alle vorhandenen Wellenfrontmanipulatoren sind mit einer Auswerte- und Steuereinheit verbunden, die ihrerseits Daten von dem Wellenfrontdetektor erhält. Die Auswerte- und Steuereinheit kann eine Auswerteeinheit aufweisen, die zum Einlesen der Wellenfrontdaten des Wellenfrontdetektors, der Auswertung der Daten und der Ermittlung eines Phasenmusters zur Korrektur der Wellenfront ausgebildet ist. Das ermittelte Phasenmuster kann durch die Auswerteeinheit auf den Wellenfrontmanipulator übertragen werden, so dass die Auswerteeinheit als Wellenfrontkontrollsystem (wave front control) ausgebildet sein kann. Die Steuereinheit kann beispielsweise ein System-PC sein. Durch diese werden beispielsweise die Bilddaten des Bilddetektors eingelesen und die Bildakquise sowie die Wellenfrontkorrektur gesteuert.

Weiterhin ist es vorteilhaft, in einem Zwischenbild zwischen der Einheit zur Strahlablenkung und dem Bilddetektor, besonders bevorzugt im Zwischenbild der Relayoptik, eine Blende anzuordnen, die zur Erhöhung des Kontrastes deutlich außerfokales Licht unterdrückt (pinhole). Je größer die Eindringtiefe der Anregungsstrahlungen in die Probe wird, desto größer müssen die Anregungsintensitäten gewählt werden, um in der Tiefe ein Signal zu erzeugen. Gemäß dem Lambert-Beerschen Gesetz fällt die Anregungsintensität mit der Eindringtiefe exponentiell ab, was dadurch kompensiert wird, dass die Leistung der Anregungsstrahlung mit eben diesem funktionalen Verlauf tiefenabhängig erhöht wird. Das hat jedoch wiederum zur Folge, dass in den oberen Probenschichten auch Zweiphotonenanregung ohne Fokussierung der Strahlung auftreten kann. Diese unerwünschten Fluoreszenzemissionen gilt es zu unterdrücken.

Die Rohdaten und/oder Ergebnisse der Auswertung der erfassten Wellenfronten können gespeichert und für eine nachfolgende Bearbeitung der erfassten Bilddaten berücksichtigt werden. Beispielsweise könne diese Daten bei der Entfaltung der Bilddaten genutzt. Dabei kann auch ein spotabhängiger Tilt berücksichtigt werden. Es ist außerdem möglich, ermittelte Korrekturdaten für verschiedene Probentypen zu katalogisieren und für spätere Anwendungen bereitzustellen. Ebenso können aktuell ermittelte Korrekturdaten mit bereits vorliegenden Daten aus einem Katalog verglichen werden. Liegt ein Katalog mit Korrekturdaten vor, können auch einige Bildaufnahmen anhand der Katalogdaten korrigiert und somit Zeit gespart und die Probenbelastung reduziert werden.

Die Vorteile der Erfindung liegen in einer schnelleren Bildaufnahme bei gleichzeitig hoher Eindringtiefe der Anregungsstrahlungen und hoher Signal-zu-Rausch-Verhältnisse. Das erfindungsgemäße Verfahren sowie die erfindungsgemäße Vorrichtung erlauben die Erfassung dynamischer Prozesse selbst bei Proben, die gegenüber einer Beleuchtung mit Anregungsstrahlung sensitiv ist und durch diese potentiell geschädigt werden können.

Die Erfindung wird nachfolgend anhand von Abbildungen und Ausführungsbeispielen näher erläutert. Es zeigen:
Fig. 1 eine schematische Darstellung eines Scankopfs und eines Statives eines Mikroskops sowie ein Abtastschema ausgewählter Bereiche (Patches) einer Objektebene gemäß dem Stand der Technik;
Fig. 2 eine schematische Darstellung eines ersten Ausführungsbeispiels einer erfindungsgemäßen Vorrichtung mit einem variablen Strahlteiler sowie eines Abtastschemas ausgewählter Bereiche (Patches) einer Objektebene;
Fig. 3a und 3b schematische Darstellungen von Arrays von Spots in einem Patch je einer Objektebene;
Fig. 4 eine schematische Darstellung eines zweiten Ausführungsbeispiels einer erfindungsgemäßen Vorrichtung mit einer Blende im Detektionsstrahlengang;
Fig. 5 eine schematische Darstellung eines dritten Ausführungsbeispiels einer erfindungsgemäßen Vorrichtung mit einem optischen Keil im Detektionsstrahlengang;
Fig. 6 eine schematische Darstellung eines vierten Ausführungsbeispiels einer erfindungsgemäßen Vorrichtung mit einem Spiegel im Detektionsstrahlengang;
Fig. 7 eine schematische Darstellung eines Teils des Strahlengangs einer optischen Vorrichtung mit einem weiteren Wellenfrontmanipulator im Detektionsstrahlengang als ein fünftes Ausführungsbeispiel einer erfindungsgemäßen Vorrichtung; und
Fig. 8 eine schematische Darstellung eines sechsten Ausführungsbeispiels einer erfindungsgemäßen Vorrichtung mit zwei quasistatischen und einem resonanten Scanner.

Nachfolgend bezeichnen verwendete Bezugszeichen in allen Figuren gleiche technische Elemente, falls dies im Einzelfall nicht ausdrücklich anders angegeben ist.

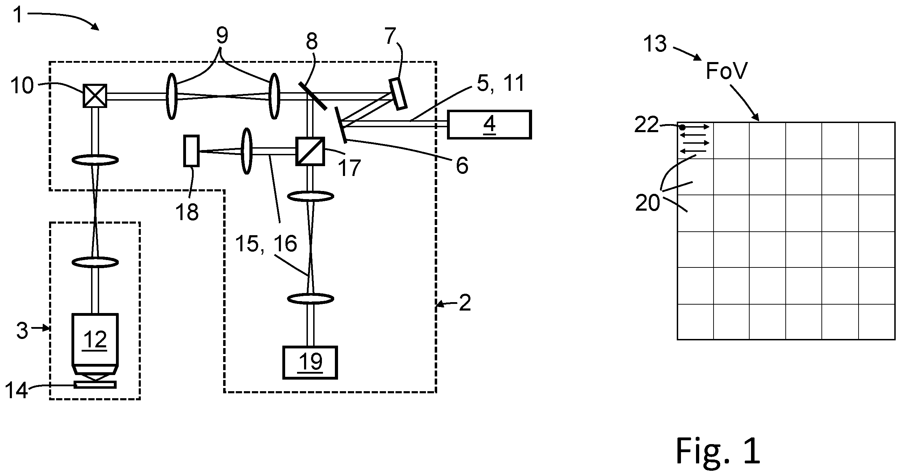

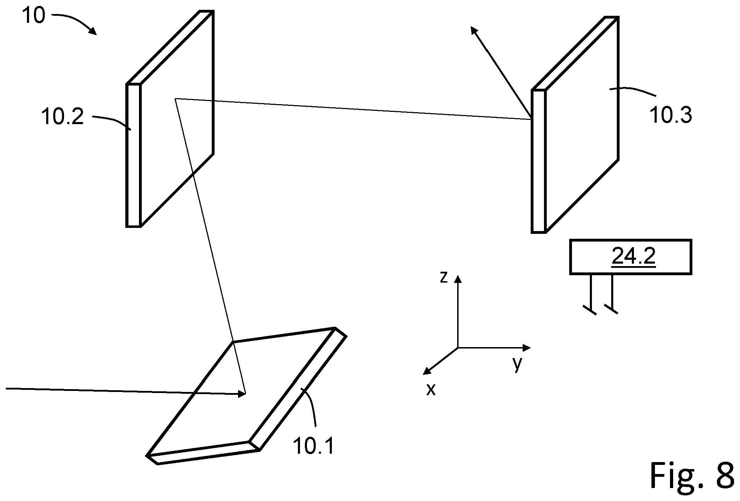

Aus dem Stand der Technik ist der Aufbau eines Mikroskops 1 bekannt, das als wesentliche Einheiten einen Scankopf 2 und ein Stativ 3 aufweist (Fig. 1). Dem Beleuchtungsstrahlengang des Scankopfs 2 wird eine erste Anregungsstrahlung 5 und im weiteren Verlauf des Verfahrens eine zweite Anregungsstrahlung 11 von einer Lichtquelle 4 in Form eines gepulsten Lasers, beispielsweise eines Femtosekundenlasers, zugeführt und über einen Spiegel 6 auf einen Wellenfrontmanipulator 7 in Form eines SLM gelenkt. Von dem Wellenfrontmanipulator 7 gelangt die erste Anregungsstrahlung 5 über einen Hauptfarbteiler 8 und ein System optischer Linsen 9 zu einer Einheit zur Strahlablenkung 10. In dieser sind beispielsweise zwei quasistatische Scanner 10.1 und 10.2 vorhanden (nicht gezeigt), mittels denen die erste Anregungsstrahlung 5 und die zweite Anregungsstrahlung 11 zweidimensional abgelenkt werden beziehungsweise abgelenkt werden können. Der Wellenfrontmanipulator 7 ist optisch konjugiert zur Pupille eines Objektivs 12 angeordnet, ebenso wie die vorteilhafterweise aufeinander abgebildeten Scanspiegel 10.1 und 10.2 und optional 10.3 (siehe Fig. 8). Die Anregungsstrahlungen 5 und 11 werden mittels des Objektivs 12 in eine Objektebene 13 (siehe zusätzliche Abbildung) einer zu erfassenden Probe 14 gerichtet. Durch Wirkung der ersten Anregungsstrahlung 5 wird in der Probe 14 eine erste Detektionsstrahlung 15 und durch Wirkung der zweiten Anregungsstrahlung 11 eine zweite Detektionsstrahlung 16 hervorgerufen und mittels des Objektivs 12 erfasst. Erste und zweite Detektionsstrahlung 15, 16 sind insbesondere Fluoreszenzstrahlung. Vom Objektiv 12 bis zum Hauptfarbteiler 8 fallen Beleuchtungsstrahlengang und Detektionsstrahlengang zusammen. Die Detektionsstrahlungen 15 beziehungsweise 16 werden durch die Scanner der Einheit zur Strahlablenkung 10 descannt. Am Hauptfarbteiler 8 wird die Detektionsstrahlung 15, 16 von der jeweiligen Anregungsstrahlung 5 beziehungsweise 11 getrennt und zu einem polarisierenden Strahlteiler 17 gelenkt. Ein Ausgang des polarisierenden Strahlteilers 17 ist zur Detektion auf einen PMT (Sekundärelektronenvervielfacher, photomultiplier) als Bilddetektor 18 geleitet. Der zweite Ausgang ist zur Wellenfrontanalyse einem Wellenfrontdetektor 19 in Form eines Shack-Hartmann-Sensors (SHS) zugeführt. Die jeweils erfasste Detektionsstrahlung 15, 16, wird somit descannt detektiert. Da Detektionsstrahlung 15, 16 in Form von Fluoreszenzstrahlung unpolarisiert ist, gelangt 50% der Strahlung zur Wellenfrontanalyse während die anderen 50% als Bilddaten detektiert werden.

Die zusätzliche Abbildung illustriert das Abtastschema oder die Scanvorschrift. Das Scanfeld (Field of View, FoV) wird virtuell in Bereiche oder Patches 20 unterteilt, deren Größe zum Beispiel abhängig von der Art der Probe 14 ist. Häufig spricht man hier von einem isoplanatischen Patch 20. Ändert sich die Wellenfrontdeformation aufgrund von Streuung in der Probe 14 sehr rasch, dann werden die Patches 20 sehr klein gewählt, finden die Änderungen eher langsam statt - zum Beispiel bei eher homogenen, dünn besetzten Proben 14 - dann können die Patches 20 größer gewählt werden.

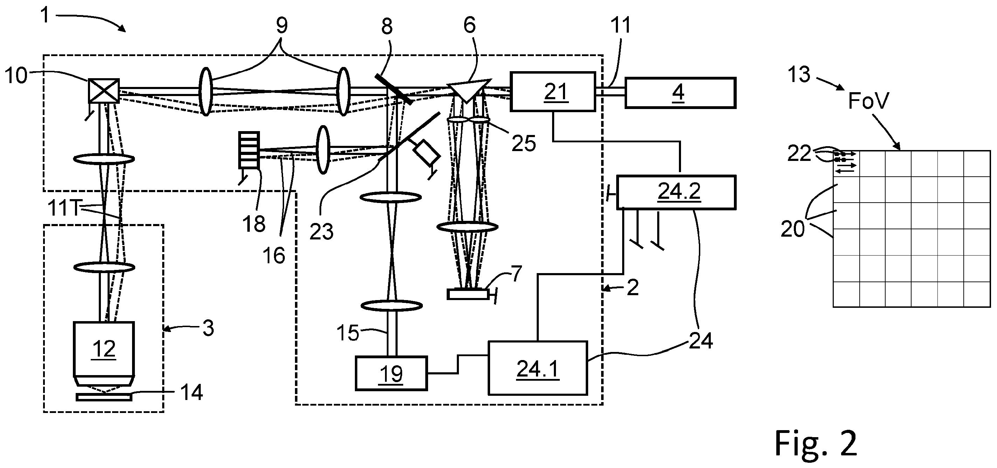

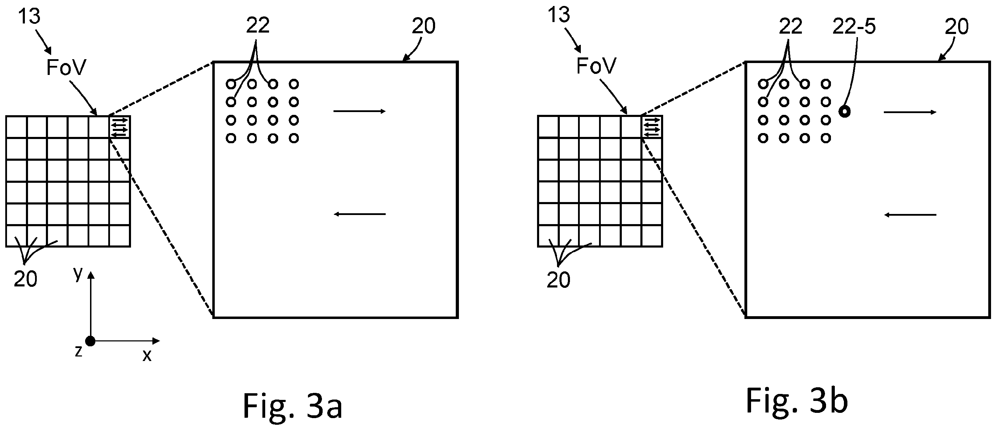

In den Figuren 2 und 3a ist ein erstes Ausführungsbeispiel der erfindungsgemäßen Vorrichtung dargestellt. Im Beleuchtungsstrahlengang ist zwischen der Lichtquelle 4 und dem Wellenfrontmanipulator 7 ein Spotgenerator 21 angeordnet, der eine Anzahl von Teilstrahlen 11T der zweiten Anregungsstrahlung 11 erzeugt, die sich in Form eines Punktmusters oder Arrays von Spots 22 in der Objektebene 13 abbilden. Ein Array kann beispielsweise Spots 22 in vier Zeilen und in vier Spalten aufweisen (siehe Fig. 3a und 3b). Aus Gründen der Übersichtlichkeit sind in der zusätzlichen Darstellung des Abtastschemas der Fig. 2 stellvertretend lediglich Spots 22 in einem 2x2-Array gezeigt. Der Spotgenerator 21 und somit die Erzeugung der Teilstrahlen 11T kann mittels einer Steuereinheit 24.2 einer Auswerte- und Steuereinheit 24 an- und ausgeschaltet werden. Die Teilstrahlen 11T überlagern einander in einer zur Objektivpupille optisch konjugierten Ebene. Diese Ebene wird mittels einer Relayoptik 25 auf den Wellenfrontmanipulator 7 zum Zwecke einer Wellenfrontmanipulation und im Ergebnis einer Wellenfrontkorrektur abgebildet. Anschließend werden die Teilstrahlen 11T der nun manipulierten zweiten Anregungsstrahlung 11 weiter in Richtung Strahlablenkungseinheit 10 geleitet, mittels der die Spots 22 der Teilstrahlen 11T als Punktmatrix beim Bildeinzug über die Probe 14 bewegt werden.

Die Abstände der Spots 22 zueinander im FoV werden so gewählt, dass diese zwar deutlich voneinander separiert sind, aber immer noch deutlich die Abmaße eines Patches 20 unterschreiten (Fig. 3a).

In dem ersten Ausführungsbeispiel (Fig. 2) ist im Detektionsstrahlengang statt eines polarisierenden Strahlteilers 17 (siehe Fig. 1) ein variabler Strahlteiler 23 angeordnet. Dieser ist als ein Filterrad ausgebildet, das eine neutralteilende Verlaufsspur auf einem konstanten Radius aufweist. Damit kann das Teilungsverhältnis zwischen Detektion der Bilddaten und Erfassung von Daten zur Wellenfrontkorrektur eingestellt werden. Der variable Strahlteiler 23 kann auch einen Farbverlauf aufweisen, der beispielsweise durch eine räumliche Variation einer Filterkante eines Langpassfilters gebildet ist. Die Filterkante wird so eingestellt, dass vom langwelligen Ende des Farbstoffspektrums gerade so viel auf den Wellenfrontdetektor 19 gebracht wird, wie notwendig ist, um die Auswertung der Wellenfront korrekt auszuführen. Der Rest des Signals, insbesondere der aus dem Intensitätsmaximum, wird zur Detektion von Bilddaten dem Bilddetektor 18 zugeführt, der im Ausführungsbeispiel als ein Multianodenphotomultiplier (MA-PMT) ausgeführt ist.

In weiteren Ausführungsmöglichkeiten ist es bei mehrfach dotierten Proben 14 auch möglich, den variablen Strahlteiler 23 so einzustellen, dass parasitär angeregte Farbstoffe zum Wellenfrontdetektor 19 propagieren, während das gewünschte Signal mit dem Bilddetektor 18 detektiert werden.

Auch bei Durchführung des erfindungsgemäßen Verfahrens mit einer Vorrichtung entsprechend der Figur 2 erfolgen die Erfassung der Daten für die Wellenfrontmanipulation und die Akquise der Bilddaten in zwei aufeinanderfolgenden Scanschritten. Dazu wird beim Abtasten des Patches 20 zum Zwecke der Wellenfrontauswertung die Erzeugung zusätzlicher Teilstrahlen 11T abgeschaltet. Die erste Anregungsstrahlung 5 wird nur in einem Strahl oder Strahlenbündel auf den Patch 20 gelenkt und dieser damit abgetastet. Dies ist insbesondere dann von Bedeutung, wenn als Wellenfrontdetektor 19 ein Shack-Hartmann-Sensor SHS mit vorgelagertem Mikrolinsenarray (MLA) verwendet wird.

Würde die Auswertung der Wellenfront mit einer Vielzahl von Teilstrahlen 11T durchgeführt werden, würden die unterschiedlichen Wellenfront-Tilts der vielen Spots 22 mehrere Signale pro Mikrolinse erzeugen. Somit wären eine Wellenfrontauswertung und eine Rekonstruktion mittels Manipulation nicht eindeutig möglich.

Die Erfassung der Daten der Wellenfront anhand der ersten Detektionsstrahlung 15, deren Auswertung und Umsetzung in Steuerbefehle erfolgt im Zusammenwirken des Wellenfrontdetektors 19 und der Auswerte- und Steuereinheit 24. Letztere kann funktional in eine Auswerteeinheit 24.1 und eine Steuereinheit 24.2 untergliedert sein.

Die Auswerteeinheit 24.1 ist in einer zur Übertragung von Daten geeigneten Weise mit dem Wellenfrontdetektor 19 und der Steuereinheit 24.2 verbunden. Letztere steht mit dem Wellenfrontmanipulator 7, der Einheit zur Strahlablenkung 10, dem Bilddetektor 18, dem Spotgenerator 21 und dem variablen Strahlteiler 23 in einer zur Übertragung von Daten geeigneten Weise in Verbindung.

Die Auswerteeinheit 24.1 weist beispielsweise ein FPGA (field programmable gate array) auf, mittels dem aus den Bilddaten der SHS-Kamera mittels Schwerpunktauswertung der durch die MLA erzeugten Signalspots deren Abweichungen gegenüber erwarteten Sollpositionen ermittelt werden. Aus diesen Abweichungen ergibt sich der lokale Wellenfront-Tilt. Die Ergebnisse für alle vom Wellenfrontdetektor 19 gelieferten Stützstellen werden auf das nutzbare Raster des Wellenfrontmanipulators 7 interpoliert und die so errechneten Phasenwerte von einem auf dem Wellenfrontmanipulator 7 gespeicherten Phasenpattern abgezogen. Gegebenenfalls wird noch ein Korrekturfaktor berücksichtigt, der das gemessene Phasenpattern von der Detektionswellenlänge am Wellenfrontdetektor 19 auf die Anregungswellenlänge umskaliert. Somit bestimmt die Algorithmik die Dauer der Wellenfrontkorrektur. Diese lässt sich aber in einem FPGA hochgradig parallelisieren und führt so ebenfalls innerhalb von wenigen Millisekunden zum Ergebnis. Somit besteht hier ein Potential einer Beschleunigung um einen Faktor 2-3 bei der Bestimmung der Wellenfrontkorrektur. Natürlich kann auch eine Berechnung in einem PC oder einer GPU beziehungsweise CPU stattfinden, wenn diese schnell genug und entsprechend rechenstark ausgelegt sind.

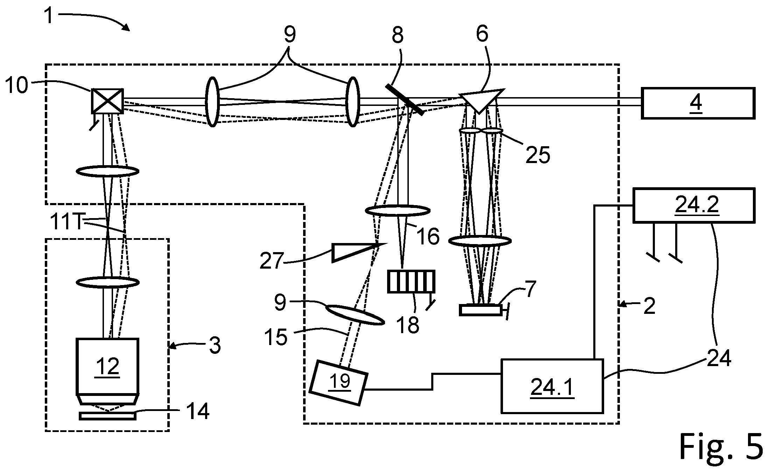

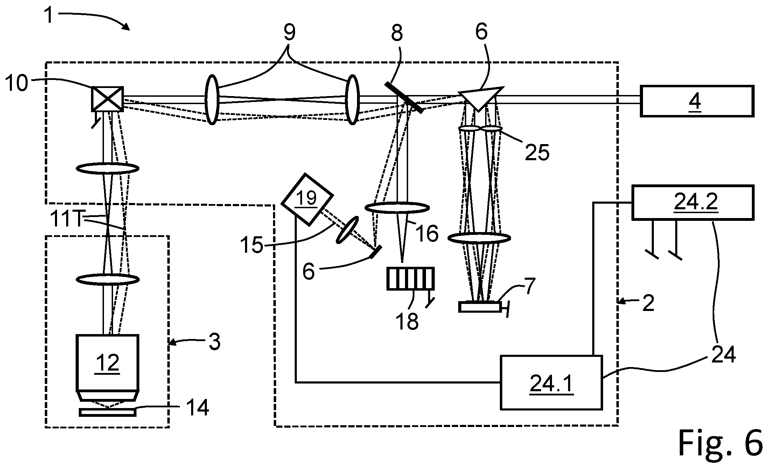

Fig. 3b In einer weiteren Ausführung der Vorrichtung und einer weiteren Ausgestaltung des Verfahrens ist die erste Anregungsstrahlung 5 zusätzlich zu einem Array von Teilstrahlen 11T erzeugt und bildet in der Objektebene 13 neben dem beispielhaft gezeigten 4x4-Array einen Spot 22-5 der ersten Anregungsstrahlung 5 aus. Dieser Strahl der ersten Anregungsstrahlung 5 kann mittels einer weiteren Lichtquelle 4 (nicht gezeigt) oder ebenfalls mittels des Wellenfrontmanipulators 7 erzeugt werden. Der Strahl kann dann geometrisch so positioniert werden, dass ein Abspalten der ersten Detektionsstrahlung 15 von der zweiten Detektionsstrahlung 16 im Detektionsstrahlengang möglichst konfliktfrei erfolgen kann (siehe dazu auch Fig. 5 und 6).

Von besonderem Vorteil ist es, wenn der Strahl der ersten Anregungsstrahlung 5 zusätzlich oder alternativ vom Wellenfrontmanipulator 7 defokussiert wird, so dass der Spot 22-5 bereits einen Patch 20 einer zukünftig zu erfassenden Objektebene 13 abtastet und bereits eine Auswertung der Wellenfront dieses zukünftig zu erfassenden Patches 20 erfolgt und vorgehalten wird.

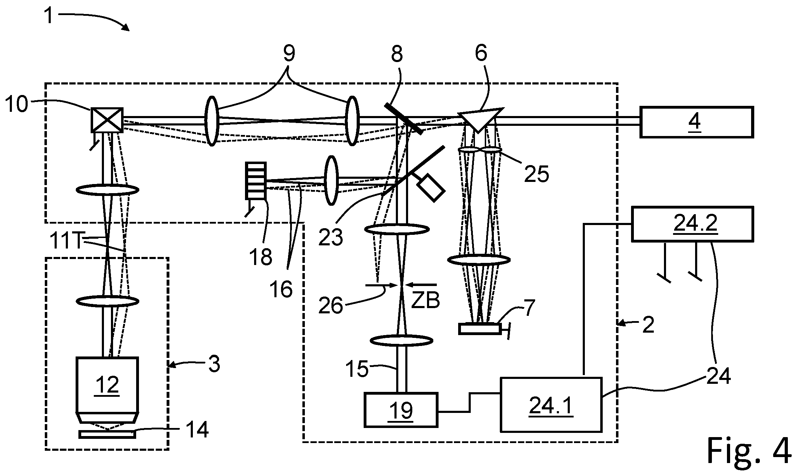

In einem zweiten Ausführungsbeispiel ist die zuvor beschriebene Anordnung um eine Blende 26 im Zwischenbild ZB vor dem Wellenfrontdetektor 19 ergänzt worden (Fig. 4) Die Blende 26 ist groß genug, um das aberrierte Punktbild der zweiten Detektionsstrahlung zum Wellenfrontdetektor 19 transmittieren zu lassen, aber so klein, dass alle anderen Abbildungen der Spots 22 auf den Wellenfrontdetektor 19 blockiert werden. Legt man die weiter oben bereits beispielhaft diskutierten Werte zu Grunde, dann ergibt sich eine Obergrenze des Blendenradius von fünf Airy-Durchmessern. Da nur noch ein Spot 22 auf den Wellenfrontdetektor 19 abgebildet wird, besteht keine Notwendigkeit mehr, den Spotgenerator 21 (siehe Fig. 2) abschalten zu müssen. Es kann daher ganz auf einen separaten Spotgenerator 21 verzichtet werden. Die Aufteilung der Anregungsintensität auf die Teilstrahlen 11T und die bewirkten Spots 22 erfolgt über entsprechend programmierte Phasengitter auf dem Wellenfrontmanipulator 7, die der zu korrigierenden Wellenfront additiv überlagert werden.

Auf den variablen Strahlteiler 23 wird in einem dritten Ausführungsbeispiel gänzlich verzichtet (Fig. 5). Stattdessen ist in der Nähe eines Zwischenbildes ZB ein strahlablenkendes optisches Mittel 27 im Detektionsstrahlengang vorhanden. Durch dessen Wirkung wird eine von einem Teilstrahl 11T herrührende erste Detektionsstrahlung 15 aus der Propagationsrichtung der ersten Detektionsstrahlung 15 abgelenkt und dem Wellenfrontdetektor 19 zugeführt. Im dargestellten Ausführungsbeispiel ist das strahlablenkende optische Mittel 27 ein optischer Keil. Der abgelenkte Anteil der ersten Detektionsstrahlung 15 kann mittels einer optischen Linse 9 auf den Wellenfrontdetektor 19 gerichtet sein.

Anstelle des Keils kann in weiteren möglichen Ausführungen der Vorrichtung auch ein Spiegel 6 zum Ablenken eingesetzt sein (Fig. 6). Dabei wird die erste Detektionsstrahlung 15 mit einem Offsetwinkel zurückgespiegelt und die entstehende Pupillenebene dem Wellenfrontdetektor 19 angeboten.

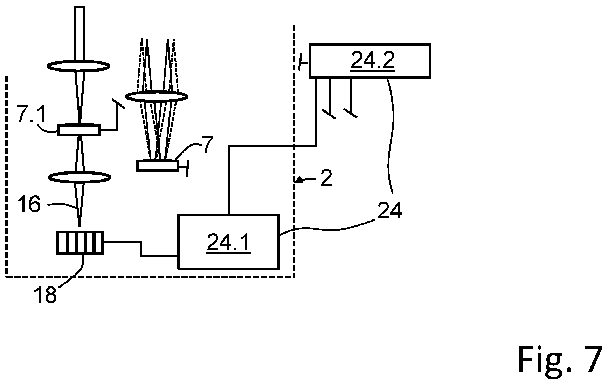

In einem weiteren Ausführungsbeispiel der Vorrichtung ist im Detektionsstrahlengang dem Bilddetektor 18 vorgeordnet ein weiterer Wellenfrontmanipulator 7.1 vorhanden (Fig. 7). Dargestellt sind lediglich ein Teil des Beleuchtungsstrahlengangs mit dem Wellenfrontmanipulator 7 sowie ein Teil des Detektionsstrahlengangs mit dem Bilddetektor 18. Diesem vorgeordnet ist der weitere Wellenfrontmanipulator 7.1, der ebenfalls als ein SLM ausgebildet sein kann. Der weitere Wellenfrontmanipulator 7.1 ist zur Manipulation der zweiten Detektionsstrahlung 16 anhand der Auswertungsergebnisse der ersten Detektionsstrahlung 15 (siehe oben) ausgebildet. Dazu steht der weitere Wellenfrontmanipulator 7.1 mit der Steuereinheit 24.2 in einer zur Übertragung von Daten geeigneten Verbindung (angedeutet gezeigt) und ist mittels dieser ansteuerbar. Der weitere Wellenfrontmanipulator 7.1 dient der Korrektur der Wellenfront der zweiten Detektionsstrahlung 16 vor dem Bilddetektor 18.

In Fig. 8 sind schematisch Scanner einer Einheit zur Strahlablenkung 10 gezeigt. Ein beispielhaft als Pfeil dargestellter Strahl trifft auf einen ersten quasistatischen Scanner 10.1, der den Strahl in der Objektebene 13 in Richtung der y-Achse (siehe Fig. 3a und 3b) ablenkt und einen Zeilenvorschub bewirkt. Anschließend fällt der Strahl auf einen zweiten quasistatischen Scanner 10.2, der den Strahl im Ergebnis in Richtung der X-Achse lenkt, wobei mittels des zweiten quasistatischen Scanners 10.2 lediglich ein Offsetwinkel eingestellt und in Zusammenwirken mit dem ersten quasistatischen Scanner 10.1 ein Patch 20 ausgewählt wird. Der eigentliche Zeilenscan entlang der x-Achse erfolgt durch entsprechende Auslenkung eines dem zweiten quasistatischen Scanner 10.2 nachgeordneten resonanten Scanners 10.3. Eine Ansteuerung der quasistatischen Scanner 10.1, 10.2 und des optionalen resonanten Scanners 10.3 erfolgt mittels der der Steuereinheit 24.2 (schematisch gezeigt).

### Bezugszeichen

- 1: Mikroskop
- 2: Scankopf
- 3: Stativ
- 4: Lichtquelle
- 5: erste Anregungsstrahlung
- 6: Spiegel
- 7: Wellenfrontmanipulator
- 8: Hauptfarbteiler
- 9: optische Linsen
- 10: Einheit zur Strahlablenkung
- 10.1: erster quasistatischer Scanner
- 10.2: zweiter quasistatischer Scanner
- 10.3: resonanter Scanner
- 11: zweite Anregungsstrahlung
- 11T: Teilstrahl
- 12: Objektiv
- 13: Objektebene
- 14: Probe
- 15: erste Detektionsstrahlung
- 16: zweite Detektionsstrahlung
- 17: polarisierender Strahlteiler
- 18: Bilddetektor
- 19: Wellenfrontdetektor
- 20: Bereich, Patch
- 21: Spotgenerator
- 22: Spot
- 22-5: Spot der ersten Anregungsstrahlung 5
- 23: variabler Strahlteiler
- 24: Steuereinheit
- 24.1: Auswerteeinheit / WF-Control
- 24.2: Steuereinheit / Steuer-PC
- 25: Relayoptik
- 26: Blende
- 27: Keil

## Patentansprüche

1. Verfahren zur Abbildung einer Probe (14), bei dem
- eine erste Anregungsstrahlung (5) entlang eines Beleuchtungsstrahlengangs in ein Volumen der Probe (14) fokussiert wird,
- eine durch die erste Anregungsstrahlung (5) bewirkte erste Detektionsstrahlung (15) erfasst und unter Verwendung eines Wellenfrontdetektors (19) hinsichtlich einer Ausbildung ihrer Wellenfront ausgewertet wird,
- anhand der Auswertungsergebnisse eine zweite Anregungsstrahlung (11), die in ein Volumen der Probe (14) fokussiert wird, manipuliert wird, indem eine räumliche Phasenverteilung der zweiten Anregungsstrahlung (11) mittels eines Wellenfrontmanipulators (7) in einer Pupillenebene eingestellt wird, um ermittelte Abweichungen der Wellenfront zu korrigieren, wobei die erste Anregungsstrahlung (5) und die zweite Anregungsstrahlung (11) auf den im Beleuchtungsstrahlengang angeordneten Wellenfrontmanipulator (7) gelenkt werden;
- ein abzubildender Bereich (20) der Probe (14) mittels der zweiten Anregungsstrahlung (11) abgetastet wird, und
- eine durch die zweite Anregungsstrahlung (11) bewirkte zweite Detektionsstrahlung (16) als Bilddaten erfasst wird,
- die zweite Anregungsstrahlung (11) in mindestens zwei Teilstrahlen (11T) in jeweils einen durch den jeweiligen Teilstrahl (11T) beleuchteten Spot (22) in einer Fokuslage in das Probenvolumen gerichtet wird, wobei die Spots (22) in einer durch die Fokuslage bestimmten und zu erfassenden Objektebene (13) voneinander getrennt sind und
- die durch die Teilstrahlen (11T) jeweils bewirkten zweiten Detektionsstrahlungen (16) separat erfasst werden.

2. Verfahren nach Anspruch 1, **dadurch gekennzeichnet, dass**
die Teilstrahlen (11T) in einer zur Objektivpupille optisch konjugierten Ebene einander überlagert, auf einen Wellenfrontmanipulator (7) abgebildet und durch diesen gemeinsam manipuliert werden.

3. Verfahren nach Anspruch 1 oder 2, **dadurch gekennzeichnet, dass**
die zu erfassende Objektebene (13) der Probe (14) in eine Anzahl von Bereichen (20) aufgeteilt wird; für einen jeweiligen Bereich (20) die Auswertung der Wellenfront vorgenommen wird; die zweite Anregungsstrahlung (11) anhand des Ergebnisses der Auswertung manipuliert wird und der Bereich mittels der Teilstrahlen (11T) der manipulierten zweiten Anregungsstrahlung (11) abgetastet wird.

4. Verfahren nach Anspruch 3 **dadurch gekennzeichnet, dass** die Spots (22) der Teilstrahlen (11T) in der Objektebene (13) in Form eines Arrays mit Zeilen und Spalten bewirkt werden und die Abtastung eines jeden Bereichs (20) mittels des Arrays vorgenommen wird.

5. Verfahren nach einem der vorhergehenden Ansprüche, **dadurch gekennzeichnet, dass** mindestens ein Teilstrahl (11T) eine von den Intensitäten der anderen Teilstrahlen (11T) abweichende Intensität besitzt.

6. Verfahren nach einem der vorhergehenden Ansprüche, **dadurch gekennzeichnet, dass** die erste Anregungsstrahlung (5) in eine zukünftig zu erfassende Objektebene (13) oder auf einen zukünftig zu erfassenden Bereich (20) gerichtet wird, die von der zweiten Anregungsstrahlung (11) erst in einem zukünftigen Erfassungsschritt, der nach einem aktuellen Erfassungsschritt ausgeführt wird, eingenommen wird, so dass die Auswertungsergebnisse der Wellenfront der zukünftigen Objektebene (13) beziehungsweise des zukünftig zu erfassenden Bereichs (20) bereits mit dem Ende des aktuellen Erfassungsschritts vorliegen.

7. Verfahren nach Anspruch 6, **dadurch gekennzeichnet, dass** der zukünftige Erfassungsschritt unmittelbar anschließend an den aktuellen Erfassungsschritt ausgeführt wird.

8. Verfahren nach einem der vorhergehenden Ansprüche, **dadurch gekennzeichnet, dass** die zweite Detektionsstrahlung (16) mittels eines weiteren Wellenfrontmanipulators (7.1) manipuliert wird, bevor diese mittels des Bilddetektors (18) erfasst wird.

9. Vorrichtung zur Abbildung einer Probe (14), umfassend
in einem Beleuchtungsstrahlengang
- wenigstens eine Lichtquelle (4) zur Bereitstellung einer ersten Anregungsstrahlung (5) und einer zweiten Anregungsstrahlung (11),
- ein Objektiv (12) zur Fokussierung der ersten und der zweiten Anregungsstrahlung (5, 11) in eine zu erfassende Objektebene (13) der Probe (14),
- eine Einheit zur Strahlablenkung (10), mittels der die zu erfassende Objektebene (13) mit der ersten und der zweiten Anregungsstrahlung (5, 11) abgetastet wird beziehungsweise abgetastet werden kann,
- einen Wellenfrontmanipulator (7) zur Manipulation der zweiten Anregungsstrahlung (11), wobei die erste Anregungsstrahlung (5) und die zweite Anregungsstrahlung (11) im Beleuchtungsstrahlengang auf den Wellenfrontmanipulator (7) gelenkt sind, und
in einem Detektionsstrahlengang
- einen Strahlteiler zur Trennung von erster beziehungsweise zweiter Anregungsstrahlung (5, 11) einerseits von einer durch die erste Anregungsstrahlung (5) bewirkten ersten Detektionsstrahlung (15) sowie einer durch die zweite Anregungsstrahlung (11) bewirkten zweiten Detektionsstrahlung (16) andererseits,
- einen Bilddetektor (18) zur Erfassung der zweiten Detektionsstrahlung (16) als Bilddaten, und
- einen Wellenfrontdetektor (19) zur Erfassung von Wellenfronten der ersten Detektionsstrahlung (15), sowie
- eine Auswerte- und Steuereinheit (24) zur Auswertung erfasster Daten der Wellenfronten der ersten Detektionsstrahlung (15) und zur Ansteuerung des Wellenfrontmanipulators (7) anhand der Auswertungsergebnisse,
**dadurch gekennzeichnet, dass**
im Beleuchtungsstrahlengang optische Mittel in Form eines Spotgenerators (21) oder des Wellenfrontmanipulators (7) zur Erzeugung mindestens zweier Teilstrahlen (11T) der zweiten Anregungsstrahlung (11) vorhanden sind, und
der Bilddetektor (18) zur simultanen, getrennten Erfassung der Bilddaten der Detektionsstrahlung der Teilstrahlen (11T) der zweiten Anregungsstrahlung (11) ausgebildet ist, und
die Auswerte- und Steuereinheit (24) zur Ansteuerung des Wellenfrontmanipulators (7), der Einheit zur Strahlablenkung (10) und optional zur Ansteuerung des Spotgenerators (21) ausgebildet ist um
- anhand der Auswertungsergebnisse die zweite Anregungsstrahlung (11) zu manipulieren, indem eine räumliche Phasenverteilung der zweiten Anregungsstrahlung 11 mittels des Wellenfrontmanipulators (7) in einer Pupillenebene eingestellt wird, um ermittelte Abweichungen der Wellenfront zu korrigieren;
- einen abzubildenden Bereich (20) der Probe (14) mittels der zweiten Anregungsstrahlung (11) abzutasten, und
- eine durch die zweite Anregungsstrahlung (11) bewirkte zweite Detektionsstrahlung (16) als Bilddaten zu erfassen,
- wobei die zweite Anregungsstrahlung (11) in mindestens zwei Teilstrahlen (11T) in jeweils einen durch den jeweiligen Teilstrahl (11T) beleuchteten Spot (22) in einer Fokuslage in das Probenvolumen gerichtet wird, wobei die Spots (22) in einer durch die Fokuslage bestimmten und zu erfassenden Objektebene (13) voneinander getrennt sind und
- die durch die Teilstrahlen (11T) jeweils bewirkten zweiten Detektionsstrahlungen (16) separat erfasst werden.

10. Vorrichtung nach Anspruch 9, **dadurch gekennzeichnet, dass** eine optische Einheit vorhanden ist, durch deren Wirkung die Teilstrahlen (11T) in einer zur Pupille des Objektivs (12) optisch konjugierten Ebene einander überlagert und gemeinsam auf den Wellenfrontmanipulator (7) abgebildet werden.

11. Vorrichtung nach Anspruch 10, **dadurch gekennzeichnet, dass** das optische Mittel zur Erzeugung mindestens zweier Teilstrahlen (11T) ein- und abschaltbar ist und im abgeschalteten Zustand nur ein Strahl in den Beleuchtungsstrahlengang gelangt, der als Strahl der ersten Anregungsstrahlung (5) bereitgestellt ist.

12. Vorrichtung nach einem der Ansprüche 9 bis 11, aufweisend entweder einen ersten quasistatischen Scanner (10.1) zur Ablenkung der ersten und zweiten Anregungsstrahlung (5, 11) in einer ersten Richtung und einen zweiten quasistatischen Scanner (10.2) zur Ablenkung der ersten und zweiten Anregungsstrahlung (5, 11) in einer zur ersten Richtung orthogonalen zweiten Richtung, oder den ersten quasistatischen Scanner (10.1) und den zweiten quasistatischen Scanner (10.2) sowie einen resonanten Scanner (10.3) zur Ablenkung der ersten und zweiten Anregungsstrahlung (5. 11) in der ersten oder in der zweiten Richtung.

13. Vorrichtung nach einem der Ansprüche 9 bis 12, **dadurch gekennzeichnet, dass** im Detektionsstrahlengang optische Mittel angeordnet sind, durch deren Wirkung ein Anteil der ersten Detektionsstrahlung (15) auf den Wellenfrontdetektor (19) gelenkt wird.

14. Vorrichtung nach einem der Ansprüche 9 bis 13, **dadurch gekennzeichnet, dass** im Detektionsstrahlengang vor dem Bilddetektor (18) am Ort eines Zwischenbildes eine Blende (26) zur Unterdrückung außerfokaler Anteile der Deataktionsstrahlung (15, 16) angeordnet ist.

15. Vorrichtung nach einem der Ansprüche 9 bis 14, **dadurch gekennzeichnet, dass** im Detektionsstrahlengang dem Bilddetektor (18) vorgeordnet ein weiterer Wellenfrontmanipulator (7) vorhanden ist, der zur Manipulation der zweiten Detektionsstrahlung (16) anhand der Auswertungsergebnisse der ersten Detektionsstrahlung (15) ausgebildet ist.

## Claims

1. Method for imaging a sample (14), wherein
- a first excitation radiation (5) is focused along an illumination beam path into a volume of the sample (14),
- a first detection radiation (15) caused by the first excitation radiation (5) is captured and evaluated in respect of a form of its wavefront using a wavefront detector (19),
- a second excitation radiation (11), which is focused into a volume of the sample (14), is manipulated on the basis of the evaluation results by virtue of a spatial phase distribution of the second excitation radiation (11) being set in a pupil plane by means of a wavefront manipulator (7) in order to correct ascertained deviations of the wavefront, wherein the first excitation radiation (5) and the second excitation radiation (11) are steered onto the wavefront manipulator (7) arranged in the illumination beam path;
- a region (20) of the sample (14) to be imaged is scanned by means of the second excitation radiation (11), and
- a second detection radiation (16) caused by the second excitation radiation (11) is captured as image data,
- the second excitation radiation (11) is directed in the form of at least two partial beams (11T) into the sample volume, into a respective spot (22) in a relative focal position illuminated by the respective partial beam (11T), wherein the spots (22) are separated from one another in an object plane (13) to be captured, which is determined by the relative focal position, and
- the second detection radiations (16) respectively caused by the partial beams (11T) are captured separately.

2. Method according to Claim 1, **characterized in that** the partial beams (11T) are superimposed in a plane that is optically conjugate to the objective pupil, imaged on a wavefront manipulator (7) and manipulated together by said wavefront manipulator.

3. Method according to Claim 1 or 2, **characterized in that**
the object plane (13) to be captured of the sample (14) is divided into a number of regions (20); the wavefront is evaluated for a respective region (20); the second excitation radiation (11) is manipulated on the basis of the result of the evaluation; and the region is scanned by means of the partial beams (11T) of the manipulated second excitation radiation (11).

4. Method according to Claim 3, **characterized in that** the spots (22) of the partial beams (11T) are caused in the form of an array with rows and columns in the object plane (13) and each region (20) is scanned by means of the array.

5. Method according to any one of the preceding claims, **characterized in that** at least one partial beam (11T) has an intensity that deviates from the intensities of the other partial beams (11T).

6. Method according to any one of the preceding claims, **characterized in that** the first excitation radiation (5) is directed into an object plane (13) to be captured in future or at a region (20) to be captured in future, which is only occupied by the second excitation radiation (11) during a future capturing step, which is carried out after a current capturing step, and so the evaluation results of the wavefront of the future object plane (13) or of the region (20) to be captured in future are already available at the end of the current capturing step.

7. Method according to Claim 6, **characterized in that** the future capturing step is carried out immediately after the current capturing step.

8. Method according to any one of the preceding claims,
**characterized in that**
the second detection radiation (16) is manipulated by means of a further wavefront manipulator (7.1) before it is captured by means of the image detector (18).

9. Apparatus for imaging a sample (14), comprising
the following in an illumination beam path:
- at least one light source (4) for providing a first excitation radiation (5) and a second excitation radiation (11),
- an objective (12) for focusing the first and the second excitation radiation (5, 11) into an object plane (13) to be captured of the sample (14),
- a unit for beam deflection (10), by means of which the object plane (13) to be captured is scanned or can be scanned by means of the first and the second excitation radiation (5, 11),
- a wavefront manipulator (7) for manipulating the second excitation radiation (11), wherein the first excitation radiation (5) and the second excitation radiation (11) in the illumination beam path are steered onto the wavefront manipulator (7), and
the following in a detection beam path:
- a beam splitter for separating first or second excitation radiation (5, 11) from, firstly, a first detection radiation (15) caused by the first excitation radiation (5) and, secondly, a second detection radiation (16) caused by the second excitation radiation (11),
- an image detector (18) for capturing the second detection radiation (16) as image data, and
- a wavefront detector (19) for capturing wavefronts of the first detection radiation (15), and also
- an evaluation and control unit (24) for evaluating captured data of the wavefronts of the first detection radiation (15) and for driving the wavefront manipulator (7) on the basis of the evaluation results,
**characterized in that**
optical means in the form of a spot generator (21) or in the form of the wavefront manipulator (7) for generating at least two partial beams (11T) of the second excitation radiation (11) are present in the illumination beam path and
the image detector (18) is embodied for simultaneous, separate capture of the image data of the detection radiation of the partial beams (11T) of the second excitation radiation (11), and
the evaluation and control unit (24) is embodied for driving the wavefront manipulator (7), the unit for beam deflection (10) and optionally for driving the spot generator (21)
in order
- to manipulate the second excitation radiation (11) on the basis of the evaluation results by virtue of a spatial phase distribution of the second excitation radiation (11) being set in a pupil plane by means of the wavefront manipulator (7) in order to correct ascertained deviations of the wavefront;
- to scan a region (20) of the sample (14) to be imaged by means of the second excitation radiation (11), and
- to capture a second detection radiation (16) caused by the second excitation radiation (11) as image data,
- wherein the second excitation radiation (11) is directed in the form of at least two partial beams (11T) into the sample volume, into a respective spot (22) in a relative focal position illuminated by the respective partial beam (11T), wherein the spots (22) are separated from one another in an object plane (13) to be captured, which is determined by the relative focal position, and
- the second detection radiations (16) respectively caused by the partial beams (11T) are captured separately.

10. Apparatus according to Claim 9, **characterized in that** an optical unit is present, as a result of the effect of which the partial beams (11T) are superimposed on one another in a plane that is optically conjugate to the pupil of the objective (12) and are imaged together on the wavefront manipulator (7).

11. Apparatus according to Claim 10, **characterized in that** the optical means for generating at least two partial beams (11T) is able to be switched on and off and, in its switched-off state, only one beam reaches the illumination beam path, said beam being provided as a beam of the first excitation radiation (5).

12. Apparatus according to any one of Claims 9 to 11, either comprising a first quasi-static scanner (10.1) for deflecting the first and second excitation radiation (5, 11) in a first direction and a second quasi-static scanner (10.2) for deflecting the first and second excitation radiation (5, 11) in a second direction orthogonal to the first direction or comprising the first quasi-static scanner (10.1) and the second quasi-static scanner (10.2) and a resonant scanner (10.3) for deflecting the first and second excitation radiation (5, 11) in the first direction or in the second direction.

13. Apparatus according to any one of Claims 9 to 12, **characterized in that** optical means are arranged in the detection beam path, as a result of the effect of which a component of the first detection radiation (15) is steered onto the wavefront detector (19).

14. Apparatus according to any one of Claims 9 to 13, **characterized in that** a stop (26) for suppressing out-of-focus components of the detection radiation (15, 16) is arranged upstream of the image detector (18) in the detection beam path, at the location of an intermediate image.

15. Apparatus according to any one of Claims 9 to 14, **characterized in that** a further wavefront manipulator (7) is present upstream of the image detector (18) in the detection beam path, said further wavefront manipulator being embodied to manipulate the second detection radiation (16) on the basis of the evaluation results of the first detection radiation (15).

## Revendications

1. Procédé pour former l'image d'un échantillon (14), dans lequel
- un premier rayonnement d'excitation (5) est focalisé le long d'un chemin de faisceau d'éclairement dans un volume de l'échantillon (14),
- un premier rayonnement de détection (15) induit par le premier rayonnement d'excitation (5) est acquis et sa formation de front d'onde est évaluée au moyen d'un détecteur de front d'onde (19),
- un deuxième rayonnement d'excitation (11), qui est focalisé dans un volume de l'échantillon (14), est manipulé sur la base des résultats d'évaluation en ajustant une distribution spatiale de phase du deuxième rayonnement d'excitation (11) au moyen d'un manipulateur de front d'onde (7) dans un plan de pupille, afin de corriger des écarts déterminés du front d'onde, le premier rayonnement d'excitation (5) et le deuxième rayonnement d'excitation (11) étant dirigés vers le manipulateur de front d'onde (7) disposé sur le chemin de faisceau d'éclairement ;
- une zone (20) dont l'image doit être formée de l'échantillon (14) est balayée au moyen du deuxième rayonnement d'excitation (11), et
- un deuxième rayonnement de détection (16) induit par le deuxième rayonnement d'excitation (11) est acquis en tant que données d'image,
- le deuxième rayonnement d'excitation (11) est dirigé sous la forme d'au moins deux sous-faisceaux (11T) respectivement dans un point lumineux (22) éclairé par le sous-faisceau (11T) respectif, à une position de mise au point dans le volume de l'échantillon, les points lumineux (22) étant séparés les uns des autres dans un plan objet (13) déterminé par la position de mise au point et à acquérir, et
- les deuxièmes rayonnements de détection (16) respectivement induits par les sous-faisceaux (11T) sont acquis séparément.

2. Procédé selon la revendication 1, **caractérisé en ce que**
les sous-faisceaux (11T) sont superposés les uns aux autres dans un plan optiquement conjugué de la pupille de l'objectif, leur image est formée sur un manipulateur de front d'onde (7) et ils sont manipulés ensemble par celui-ci.

3. Procédé selon la revendication 1 ou 2, **caractérisé en ce que**
le plan objet (13) à acquérir de l'échantillon (14) est divisé en un certain nombre de zones (20) ; l'évaluation du front d'onde est effectuée pour une zone respective (20) ; le deuxième rayonnement d'excitation (11) est manipulé sur la base du résultat de l'évaluation et la zone est balayée au moyen des sous-faisceaux (11T) du deuxième rayonnement d'excitation (11) manipulé.

4. Procédé selon la revendication 3, **caractérisé en ce que** les points lumineux (22) des sous-faisceaux (11T) sont produits dans le plan objet (13) sous la forme d'un réseau de lignes et de colonnes et le balayage de chaque zone (20) est effectué au moyen du réseau.

5. Procédé selon l'une des revendications précédentes, **caractérisé en ce qu'**au moins un sous-faisceau (11T) possède une intensité s'écartant des intensités des autres sous-faisceaux (11T).

6. Procédé selon l'une des revendications précédentes, **caractérisé en ce que** le premier rayonnement d'excitation (5) est dirigé vers un futur plan objet (13) à acquérir ou une future zone à acquérir (20), lesquels ne seront occupés par le deuxième rayonnement d'excitation (11) que lors d'une future étape d'acquisition, qui est exécutée après une étape d'acquisition actuelle, de sorte que les résultats d'évaluation du front d'onde du futur plan objet (13) et respectivement de la future zone (20) à acquérir sont déjà disponibles à la fin de l'étape d'acquisition actuelle.

7. Procédé selon la revendication 6, **caractérisé en ce que** la future étape d'acquisition est exécutée immédiatement après l'étape d'acquisition actuelle.

8. Procédé selon l'une des revendications précédentes, **caractérisé en ce que**
le deuxième rayonnement de détection (16) est manipulé au moyen d'un autre manipulateur de front d'onde (7.1), avant d'être acquis au moyen du détecteur d'image (18).

9. Dispositif pour former l'image d'un échantillon (14), comprenant
sur un chemin de faisceau d'éclairement
- au moins une source de lumière (4) pour la mise à disposition d'un premier rayonnement d'excitation (5) et d'un deuxième rayonnement d'excitation (11),
- un objectif (12) pour la focalisation des premier et deuxième rayonnements d'excitation (5, 11) dans un plan objet (13) à acquérir de l'échantillon (14),
- une unité de déviation de faisceau (10), au moyen de laquelle le plan objet (13) à acquérir est balayé ou peut être balayé avec le premier et le deuxième rayonnement d'excitation (5, 11),
- un manipulateur de front d'onde (7) pour manipuler le deuxième rayonnement d'excitation (11), le premier rayonnement d'excitation (5) et le deuxième rayonnement d'excitation (11) étant dirigés vers le manipulateur de front d'onde (7) sur le chemin de faisceau d'éclairement, et
sur un chemin de faisceau de détection
- un séparateur de faisceaux pour la séparation du premier ou du deuxième rayonnement d'excitation (5, 11) d'une part, d'un premier rayonnement de détection (15) induit par le premier rayonnement d'excitation (5) et d'un deuxième rayonnement de détection (16) induit par le deuxième rayonnement d'excitation (11), d'autre part,
- un détecteur d'image (18) pour l'acquisition du deuxième rayonnement de détection (16) en tant que données d'image, et
- un détecteur de front d'onde (19) pour l'acquisition des fronts d'onde du premier rayonnement de détection (15), ainsi que
- une unité d'évaluation et de commande (24) pour l'évaluation des données acquises des fronts d'onde du premier rayonnement de détection (15) et pour la commande du manipulateur de front d'onde (7) sur la base des résultats d'évaluation,
**caractérisé en ce que**
des moyens optiques sous la forme d'un générateur de spots (21) ou du manipulateur de front d'onde (7) sont présents sur le chemin de faisceau d'éclairement, pour la génération d'au moins deux sous-faisceaux (11T) du deuxième rayonnement d'excitation (11), et
le détecteur d'image (18) est conçu pour l'acquisition simultanée et séparée des données d'image du rayonnement de détection des sous-faisceaux (11T) du deuxième rayonnement d'excitation (11), et
l'unité d'évaluation et de commande (24) est conçue pour la commande du manipulateur de front d'onde (7), de l'unité de déviation de faisceau (10) et, facultativement, pour la commande du générateur de point lumineux (21)
pour
- manipuler le deuxième rayonnement d'excitation (11) sur la base des résultats d'évaluation en ajustant une distribution spatiale de phase du deuxième rayonnement d'excitation (11) au moyen du manipulateur de front d'onde (7) dans un plan de pupille, afin de corriger les écarts déterminés du front d'onde ;
- balayer une zone (20) dont l'image doit être formée de l'échantillon (14) au moyen du deuxième rayonnement d'excitation (11), et
- acquérir un deuxième rayonnement de détection (16) induit par le deuxième rayonnement d'excitation (11) en tant que données d'image,
- le deuxième rayonnement d'excitation (11) étant dirigé sous la forme d'au moins deux sous-faisceaux (11T) respectivement dans un point lumineux (22) éclairé par le sous-faisceau (11T) respectif, à une position de mise au point dans le volume de l'échantillon, les points lumineux (22) étant séparés les uns des autres dans un plan objet (13) déterminé par la position de mise au point et à acquérir, et
- les deuxièmes rayonnements de détection (16) respectivement induits par les sous-faisceaux (11T) sont acquis séparément.

10. Dispositif selon la revendication 9, **caractérisé en ce qu'**il est prévu une unité optique dont l'effet est que les sous-faisceaux (11T) se superposent l'un à l'autre et que leur image est formée conjointement sur le manipulateur de front d'onde (7) dans un plan optiquement conjugué de la pupille de l'objectif (12).

11. Dispositif selon la revendication 10, **caractérisé en ce que** le moyen optique destiné à générer au moins deux sous-faisceaux (11T) peut être activé et désactivé et, dans l'état désactivé, un seul faisceau atteint le chemin de faisceau d'éclairement, lequel est mis à disposition en tant que faisceau du premier rayonnement d'excitation (5).

12. Dispositif selon l'une des revendications 9 à 11, comprenant soit un premier dispositif de balayage quasi-statique (10.1) pour la déviation des premier et deuxième rayonnements d'excitation (5, 11) dans une première direction et un deuxième dispositif de balayage quasi-statique (10.2) pour la déviation des premier et deuxième rayonnements d'excitation (5, 11) dans une deuxième direction orthogonale à la première, soit le premier dispositif de balayage quasi-statique (10.1) et le deuxième dispositif de balayage quasi-statique (10.2) ainsi qu'un dispositif de balayage résonant (10.3) pour la déviation des premier et deuxième rayonnements d'excitation (5, 11) dans la première ou la deuxième direction.

13. Dispositif selon l'une des revendications 9 à 12, **caractérisé en ce que** des moyens optiques sont disposés sur le chemin de faisceau de détection, ayant pour effet qu'une partie du premier rayonnement de détection (15) est dirigée vers le détecteur de front d'onde (19).

14. Dispositif selon l'une des revendications 9 à 13, **caractérisé en ce qu'**un diaphragme (26) est disposé sur le chemin de faisceau de détection en amont du détecteur d'image (18) à l'emplacement d'une image intermédiaire pour la suppression des parties extra-focales du rayonnement de détection (15, 16).

15. Dispositif selon l'une des revendications 9 à 14, **caractérisé en ce qu'**il est prévu sur le chemin de faisceau de détection, en amont du détecteur d'image (18), un autre manipulateur de front d'onde (7) qui est conçu pour manipuler le deuxième rayonnement de détection (16) sur la base des résultats d'évaluation du premier rayonnement de détection (15).
